(19) Europäisches Patentamt
European Patent Office
Office européen des brevets

(11) **EP 4 582 768 A1**

(12) **EUROPEAN PATENT APPLICATION**
published in accordance with Art. 153(4) EPC

(43) Date of publication:
**09.07.2025 Bulletin 2025/28**

(21) Application number: **23860872.3**

(22) Date of filing: **30.08.2023**

(51) International Patent Classification (IPC):
**G01B 11/02** (2006.01)     **G01B 11/03** (2006.01)
**G01N 21/84** (2006.01)     **G06T 7/00** (2017.01)
**G06T 7/11** (2017.01)     **G06T 7/13** (2017.01)
**H01M 10/04** (2006.01)

(52) Cooperative Patent Classification (CPC):
**G01B 11/02; G01B 11/03; G01N 21/84; G06T 7/00;
G06T 7/11; G06T 7/13; H01M 10/04;** Y02E 60/10

(86) International application number:
**PCT/KR2023/012877**

(87) International publication number:
**WO 2024/049196 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **31.08.2022   KR 20220109764
09.08.2023   KR 20230103920**

(71) Applicant: **LG Energy Solution, Ltd.
Seoul 07335 (KR)**

(72) Inventors:
• **KIM, Shikwon
  Daejeon 34122 (KR)**
• **CHA, Yeongeun
  Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **BOUNDARY LINE DETECTION DEVICE AND METHOD**

(57)     In a boundary detection device and method according to embodiments of the present invention, images of the same electrode are captured to acquire first and second electrode images having different brightness values, and on the basis of pixel coordination information of boundary of an uncoated portion, acquired from the first electrode image, final boundary of the uncoated portion are detected from the second electrode image, so that the detection accuracy of the boundary can be enhanced.

[Figure 5]

EP 4 582 768 A1

**Description**

This application claims priority to and the benefit of Korean Patent Application No. 10-2022-0109764 filed in the Korean Intellectual Property Office on August 31, 2022 and Korean Patent Application No.10-2023-0103920 filed in the Korean Intellectual Property Office on August 9, 2023, the entire contents of which are incorporated herein by reference.

[Technical Field]

The present invention relates to a device and method for detecting boundaries of battery electrodes, and more particularly, to a device and method for detecting boundaries of uncoated portions on electrode images.

[Background Art]

As the price of energy sources rises due to depletion of fossil fuels and interest in environmental pollution increases, a demand for secondary batteries as an eco-friendly alternative energy source is rapidly increasing.

Lithium secondary batteries among secondary batteries are being applied to various industrial fields such as from mobile application devices to automobiles, robots, and energy storage devices, as a response to today's environmental regulations and high oil price issues.

These lithium batteries are generally classified into cylindrical, prismatic, or pouch types depending on the shape of the exterior material in which the electrode assembly is accommodated.

Among these, cylindrical batteries may be provided in a form where the electrode assembly is inserted inside the battery can along with the electrolyte.

An electrode constituting an electrode assembly can be divided into an electrode portion, which is an area coated with positive and negative electrode active materials, and an uncoated portion which is an area where the electrode active material is not coated.

Generally, during a slitting process, electrodes are cut to a certain size to fit the size of a battery can.

Here, in order to measure widths of the electrode portion and the uncoated portion of the electrode which is inserted into the battery can and cut the electrode uniformly, it is necessary to clearly detect the boundary dividing the electrode portion and the uncoated portion.

A conventional boundary detection device adjusts an exposure value of a camera so that a brightness pixel value (Gray Value) of the uncoated region is 255 and detects the boundaries of the uncoated portion based on the electrode image captured by the camera.

More specifically, a conventional boundary detection device detects at least one pixel having a brightness value that differs by more than a threshold value from a brightness value of a single pixel of an uncoated portion as a boundary, from an electrode image.

However, according to the conventional boundary detection device, when setting the brightness pixel value (gray value) of the uncoated portion, the position of the boundary on the electrode image may be distorted to be different from the position of the actual boundary. Accordingly, the conventional boundary detection device has the disadvantage of deteriorating measurement accuracy by incorrectly detecting the boundary.

[Detailed Description of the Invention]

[Technical Problem]

To obviate one or more problems of the related art, embodiments of the present disclosure provide a boundary detection device.

To obviate one or more problems of the related art, embodiments of the present disclosure also provide a boundary detection method.

To obviate one or more problems of the related art, embodiments of the present disclosure also provide a boundary detection system.

[Technical Solution]

In order to achieve the objective of the present disclosure, a boundary detection device for detecting boundaries of an uncoated portion within battery electrodes may include at least one processor; and a memory configured to store at least one instruction executed by the at least one processor, and the at least one instruction may include an instruction to obtain a first electrode image and a second electrode image in which the same electrode located at the same point is captured; an instruction to detect pixel information of temporary boundaries on both sides of an uncoated portion in the electrode from the first electrode image; and an instruction to detect final boundaries on both sides of the uncoated portion from the second electrode image based on the pixel information.

Here, the first electrode image may be an image captured by adjusting an exposure value of a camera so that a pixel brightness value of the uncoated portion in the first electrode image is a predetermined first threshold value.

In addition, the second electrode image may be an image captured by adjusting an exposure value of a camera so that a pixel brightness value of the uncoated portion in the second electrode image is a second threshold value, wherein the second threshold value is different from the first threshold value.

Furthermore, the instruction to detect pixel information of temporary boundaries on both sides of the uncoated portion may include an instruction to detect the temporary boundaries on both sides of the uncoated portion in the first electrode image; and an instruction to obtain pixel coordinate information of the temporary boundaries.

Here, the instruction to detect the temporary boundaries may include an instruction to detect a first temporary boundary located on one side of the uncoated portion in the first electrode image using a derivative mask filter and an instruction to detect a second temporary boundary located on the other side of the uncoated portion in the first electrode image using the derivative mask filter.

For example, the derivative mask filter may be a Sobel filter.

Meanwhile, the instruction to detect final boundaries may include an instruction to identify pixel coordinate information of the first temporary boundary and the second temporary boundary and obtain a first virtual boundary and a second virtual boundary which are located at the same points on the second electrode image where the first temporary boundary and the second temporary boundary are located and an instruction to determine a first inspection area and a second inspection area based on the first virtual boundary and the second virtual boundary, respectively, and detect a first final boundary and a second final boundary from the first inspection area and the second inspection area, respectively.

Furthermore, the instruction to detect the first final boundary and the second final boundary may include an instruction to detect pixels having the maximum value in difference of brightness value (gray level) compared to neighboring pixels within the first inspection area, as the first final boundary and an instruction to detect pixels having the maximum value in difference of brightness value (gray level) compared to neighboring pixels within the second inspection area, as the second final boundary.

According to another embodiment of the present disclosure, a boundary detection method for detecting boundaries of uncoated region within battery electrodes may include acquiring a first electrode image and a second electrode image in which the same electrode located at the same point is captured; detecting pixel information of temporary boundaries on both sides of an uncoated portion in the electrode from the first electrode image; and detecting final boundaries on both sides of the uncoated portion from the second electrode image based on the pixel information.

Here, the first electrode image may be an image captured by adjusting an exposure value of a camera so that a pixel brightness value of the uncoated portion in the first electrode image is a predetermined first threshold value.

In addition, the second electrode image may be an image captured by adjusting an exposure value of a camera so that a pixel brightness value of the uncoated portion in the second electrode image is a second threshold value, wherein the second threshold value is different from the first threshold value.

Furthermore, the detecting pixel information of temporary boundaries on both sides of the uncoated portion may include detecting the temporary boundaries on both sides of the uncoated portion in the first electrode image; and obtaining pixel coordinate information of the temporary boundaries.

Here, the detecting the temporary boundaries may include detecting a first temporary boundary located on one side of the uncoated portion in the first electrode image using a derivative mask filter; and detecting a second temporary boundary located on the other side of the uncoated portion in the first electrode image using the derivative mask filter.

For example, the derivative mask filter may be a Sobel filter.

Meanwhile, the detecting final boundaries may include identifying pixel coordinate information of the first temporary boundary and the second temporary boundary and obtaining a first virtual boundary and a second virtual boundary which are located at the same points on the second electrode image where the first temporary boundary and the second temporary boundary are located; and determining a first inspection area and a second inspection area based on the first virtual boundary and the second virtual boundary, respectively; and detecting a first final boundary and a second final boundary from the first inspection area and the second inspection area, respectively.

Furthermore, the detecting the first final boundary and the second final boundary may include detecting pixels having the maximum value in difference of brightness value (gray level) compared to neighboring pixels within the first inspection area, as the first final boundary; and detecting pixels having the maximum value in difference of brightness value (gray level) compared to neighboring pixels within the second inspection area, as the second final boundary.

According to another embodiment of the present disclosure, a boundary detection system for detecting boundaries of an uncoated portion within battery electrodes may include an imaging device configured to generate a first electrode image and a second electrode image in which the same electrode located at the same point is captured with different brightness values, by adjusting an exposure value and a boundaryboundary detection device configured to obtain the first electrode image and the second electrode image from the imaging device, to detect pixel information of temporary boundaries on both sides of an uncoated portion in the electrode from the first electrode image, and to detect final boundaries on both sides of the uncoated portion from the second electrode image based on the pixel information.

[Advantageous Effects]

The boundary detection device and method according to embodiments of the present invention may acquire a first electrode image and a second electrode image with different brightness values in which the same electrode is captured and detect final boundaries of the uncoated portion from the second electrode image based on pixel coordinate information of boundaries of the uncoated portion obtained from the first electrode image, thereby improving detection accuracy of boundary detection.

[Brief Description of the Drawings]

FIG. 1 is an electrode image of a general boundary detection device.

FIG. 2 is a graph of boundary position change according to brightness value setting of a general boundary detection device.

FIG. 3 is a block diagram of a boundary detection system according to embodiments of the present invention.

FIG. 4 is a block diagram of a boundary detection device according to embodiments of the present invention.

FIG. 5 is a flowchart of a boundary detection method using the boundary detection device according to embodiments of the present invention.

FIG. 6 is a conceptual diagram of the boundary detection method according to embodiments of the present invention.

FIG. 7 is a flowchart for explaining a method of detecting final boundaries of the boundary detection method according to embodiments of the present invention.

FIG. 8 is an image showing pixel coordinates of a second final boundary of the boundary detection device according to an experimental example of the present invention.

[Description of reference munbers]

1000: camera 5000: boundary detection device
100: memory 200: processor
300: transceiver device 400: input interface device
500: output interface device 600: storage device
700: bus

[Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

Terms used in the present application are used only to describe specific embodiments, and are not intended to limit the present invention. A singular form includes a plural form if there is no clearly opposite meaning in the context. In the present application, it should be understood that the term "include" or "have" indicates that a feature, a number, a step, an operation, a component, a part or the combination thereof described in the specification is present, but does not exclude a possibility of presence or addition of one or more other features, numbers, steps, operations, components, parts or combinations thereof, in advance.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

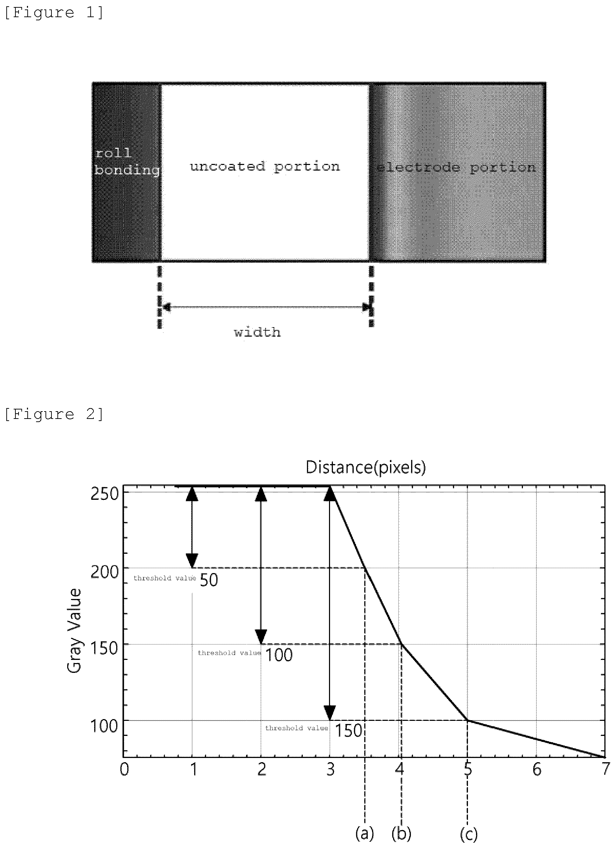

FIG. 1 is an electrode image of a general boundary detection device.

Referring to FIG. 1, an electrode applied to a cylindrical battery can be divided into a roll bonding area, a electrode portion, and an uncoated portion.

In more detail, the roll bonding area may be an area that is joined to a roll of a cylindrical battery, and the electrode portion may be an area which is coated with electrode active material for negative and positive electrodes. Additionally, the uncoated portion may be an area in which the electrode active material is not coated.

In a slitting process, the width of the electrode portion and the width of the uncoated portion are calculated so that batteries with the same specification are formed, and the electrodes can be cut uniformly within a margin of error according to the calculated result.

Accordingly, it is necessary to clearly detect the boundaries between the roll bonding area, the electrode portion, and the uncoated portion, in order to calculate the widths of the electrode portion and the uncoated portion. In other words, it is necessary to clearly detect the boundaries on both sides of the uncoated area.

A general boundary detection device detects boundaries of the uncoated portion based on an electrode image obtained from a camera.

Here, the exposure value of the camera may be set so that a brightness pixel value (Gray Value) of the uncoated portion on the electrode image has a specific value. Accordingly, a general boundary detection device detects pixels corresponding to a preset threshold brightness value on an electrode image as a boundary.

To be more specific, a general boundary detection device can detect a boundary of an uncoated portion based on an electrode image captured by adjusting an exposure value of a camera so that the brightness pixel value (Gray Value) of the uncoated portion is 255.

FIG. 2 is a graph of boundary position change according to brightness value setting of a general boundary detection device.

Referring to FIG. 2, a general boundary detection device detects pixels corresponding to a preset threshold brightness value as a boundary based on an electrode image.

However, a general boundary detection device has the disadvantage of requiring a reset of the threshold value for boundary detection of the uncoated portion when a saturation value changes due to a change in composition of insulating liquid.

Accordingly, a general boundary detection device has the disadvantage of deteriorating precision when measuring the widths of the electrode portion and the uncoated portion by incorrectly detecting the boundary positions of the uncoated part.

In addition, according a general boundary detection device, the position of the boundaries of the uncoated portion may vary depending on a change in the threshold brightness value.

For example, if the threshold brightness value is defined as 50, difference between a position of the boundary detected by a general boundary detection device and the actual boundary may be about 3.6 pixels.

For another example, when the threshold brightness value is defined as 100, the difference between a position of the boundary detected by a general boundary detection device and the actual boundary may be about 4 pixels.

For another example, when the threshold brightness value is defined as 150, the difference between a position of the boundary detected by a general boundary detection device and the actual boundary may be about 5 pixels.

The present invention was developed to solve this technical problem. The present invention may detect boundaries of the uncoated portion using the first electrode image and the second electrode image taken at different brightness values by adjusting the exposure of the camera, thereby improving accuracy of boundary detection.

Hereinafter, preferred embodiments according to the present invention will be described in detail with reference to the attached drawings.

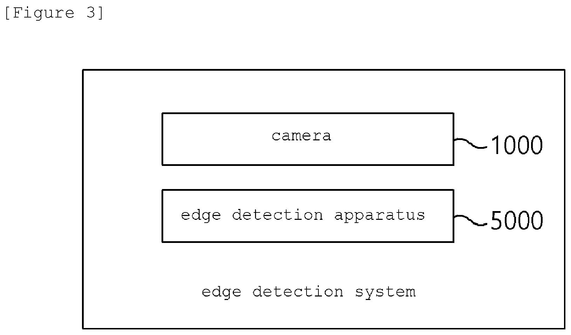

FIG. 3 is a block diagram of a boundary detection system according to embodiments of the present invention.

Referring to FIG. 3, the boundary detection system may include a camera (imaging device) 1000 and a boundary detection device 5000.

To be more specific, the camera 1000 may be installed at a site where an electrode preparation process is performed. In other words, the camera 1000 may be fixedly installed in an equipment where a plurality of electrodes are sequentially moved. Accordingly, the camera 1000 may acquire a plurality of electrode images by individually imaging a plurality of electrodes passing through the equipment.

Meanwhile, a plurality of cameras 1000 may be provided. More specifically, the camera 1000 may include a first camera and a second camera that photograph the same point.

The first camera and the second camera may have different exposure values.

According to an embodiment, the exposure value of the first camera 1 may be preset so that the pixel brightness value of the uncoated portion corresponds to a first threshold value. Accordingly, the first camera may acquire at least one first electrode image by imaging a plurality of electrodes passing through a specific point. For example, the first threshold may be 255.

In addition, the exposure value of the second camera may be preset so that the pixel brightness value of the uncoated portion corresponds to a second threshold value. Accordingly, the second camera may acquire at least one second electrode image by imaging a plurality of electrodes passing through the specific point. For example, the second threshold may be 200.

In other words, the first electrode image and the second electrode image may be images taken of the same electrode at the same point.

The boundary detection device 5000 may be linked with at least one camera 1000 to obtain a first electrode image and a second electrode image from the camera 1000. However, the boundary detection device 5000 is not limited to this and may acquire at least one first electrode image and at least one second electrode image through other various ways.

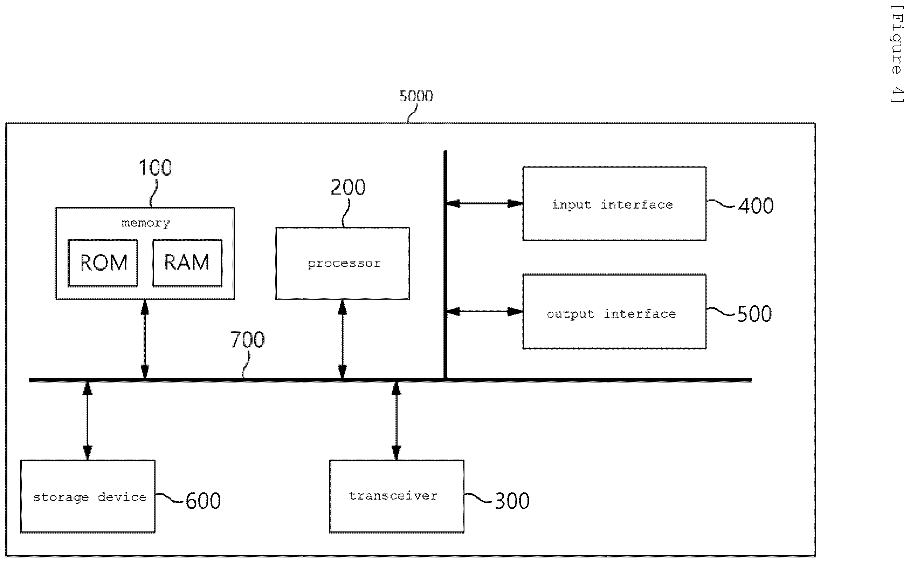

Thereafter, the boundary detection device 5000 may detect temporary boundaries based on the first electrode image and detect final boundaries based on the detected temporary boundaries. Accordingly, the boundary detection device 5000 according to embodiments of the present invention has improved boundary detection accuracy of the uncoated area, and can precisely measure the width of the uncoated portion and the electrode part. The configuration of the boundary detection device 5000 will be described in more detail with reference to FIG. 4 below.

FIG. 4 is a block diagram of a boundary detection device according to embodiments of the present invention.

Describing the boundary detection device 5000 in more detail by configuration with reference to FIG. 4, the boundary detection device 5000 may include a memory 100, a processor 200, a transceiver device 300, an input interface device 400, an output interface device 500, and a storage device 600.

According to embodiments, respective components 100, 200, 300, 400, 500, and 600 included in the boundary detection device are connected by a bus 700 and can communicate with each other.

Among the components 100, 200, 300, 400, 500, and 600, the memory 100 and the storage device 600 may include at least one of a volatile storage medium and a non-volatile storage medium. For example, the memory 100 and the storage device 600 may include at least one of read only memory (ROM) and random access memory (RAM).

Among these, the memory 100 may include at least one instruction executed by the processor 200.

According to embodiments, the at least one instruction may include an instruction to obtain a first electrode image and a second electrode image in which the same electrode located at the same point is captured; an instruction to detect pixel information of temporary boundaries on both sides of an uncoated portion in the electrode from the first electrode image; and an instruction to detect final boundaries on both sides of the uncoated portion from the second electrode image based on the pixel information.

Here, the first electrode image may be an image captured by adjusting an exposure value of a camera so that a pixel brightness value of the uncoated portion in the first electrode image is a predetermined first threshold value.

In addition, the second electrode image may be an image captured by adjusting an exposure value of a camera so that a pixel brightness value of the uncoated portion in the second electrode image is a second threshold value, wherein the second threshold value is different from the first threshold value.

Furthermore, the instruction to detect pixel information of temporary boundaries on both sides of the uncoated portion may include an instruction to detect the temporary boundaries on both sides of the uncoated portion in the first electrode image; and an instruction to obtain pixel coordinate information of the temporary boundaries.

Here, the instruction to detect the temporary boundaries may include an instruction to detect a first temporary boundary located on one side of the uncoated portion in the first electrode image using a derivative mask filter and an instruction to detect a second temporary boundary located on the other side of the uncoated portion in the first electrode image using the derivative mask filter.

For example, the derivative mask filter may be a Sobel filter.

Meanwhile, the instruction to detect final boundaries may include an instruction to identify pixel coordinate information of the first temporary boundary and the second temporary boundary and obtain a first virtual boundary and a second virtual boundary which are located at the same points on the second electrode image where the first temporary boundary and the second temporary boundary are located and an instruction to determine a first inspection area and a second inspection area based on the first virtual boundary and the second virtual boundary, respectively, and detect a first final boundary and a second final boundary from the first inspection area and the second inspection area, respectively.

Furthermore, the instruction to detect the first final boundary and the second final boundary may include an instruction to detect pixels having the maximum value in difference of brightness value (gray level) compared to neighboring pixels within the first inspection area, as the first final boundary and an instruction to detect pixels having the maximum value in difference of brightness value (gray level) compared to neighboring pixels within the second inspection area, as the second final boundary.

Meanwhile, the processor 200 may refer to a central processing unit (CPU), a graphics processing unit (GPU), or a dedicated processor on which methods according to embodiments of the present invention are performed.

As described above, the processor 200 may execute at least one program command stored in the memory 100.

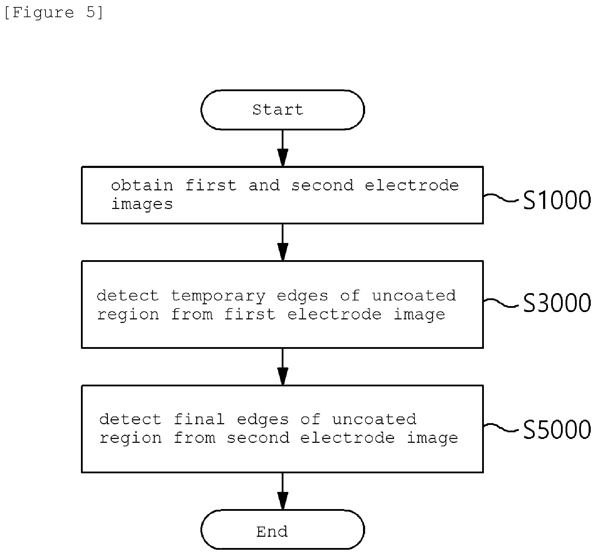

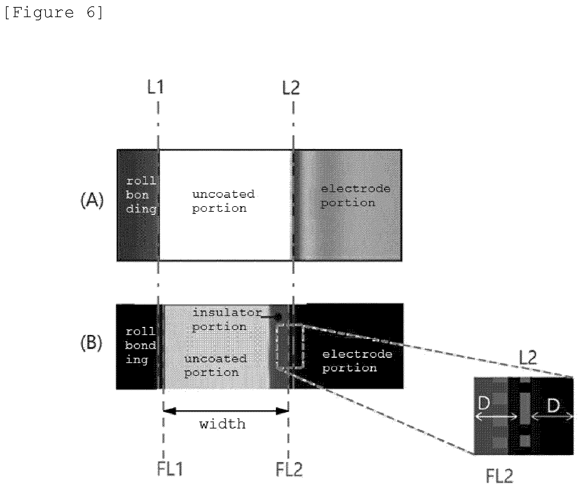

FIG. 5 is a flowchart of a boundary detection method using the boundary detection device according to embodiments of the present invention and FIG. 6 is a conceptual diagram of the boundary detection method according to embodiments of the present invention.

Referring to FIGS. 5 and 6, the boundary detection device 5000 may obtain a first electrode image (A) and a second electrode image (B) (S1000).

As described above, the first electrode image (A) and the second electrode image (B) may be images taken of the same electrode located at the same point.

Here, the pixel brightness value of the uncoated region in the first electrode image (A) may be a preset first threshold value, and the pixel brightness value of the uncoated region in the second electrode image (B) may be a preset second threshold value.

Afterwards, the boundary detection device 5000 may detect temporary boundaries using the first electrode image (A) (S3000).

In more detail, the boundary detection device 5000 may detect the first temporary boundary L1 and the second temporary boundary L2. Here, the first temporary boundary(L1) may be a boundary located on one side of the uncoated region on the first electrode image (A), and the second temporary boundary (L2) may be a boundary located on the other side of the uncoated region on the first electrode image (A). In other words, the first temporary boundary (L1) may be a boundary located between the roll bonding area and the uncoated region, and the second temporary boundary (L2) may be a boundary located between the uncoated portion and the electrode portion.

According to an embodiment, the boundary detection device 5000 may detect the first temporary boundary L1 and the second temporary boundary L2 using a derivative mask filter. For example, the derivative mask filter may be a Sobel filter.

For example, the boundary detection device 5000 may use a Sobel filter disclosed in [Equation 1] and [Equation 2] below to obtain pixel coordinate information of the first temporary boundary L1 and the second temporary boundary L2 from the first electrode image A.

[Equation 1]

$$G_x = \begin{bmatrix} -1 & 0 & 1 \\ -2 & 0 & 2 \\ -1 & 0 & 1 \end{bmatrix}$$

Gx: x-direction partial derivative mask

[Equation 2]

$$G_y = \begin{bmatrix} -1 & -2 & -1 \\ 0 & 0 & 0 \\ 1 & 2 & 1 \end{bmatrix}$$

Gy: y-direction partial derivative mask

Thereafter, the boundary detection device 5000 may detect final boundaries from the second electrode image B based on the pixel coordinate information of the first temporary boundary L1 and the second temporary boundary L2 detected from the first electrode image A (S5000).

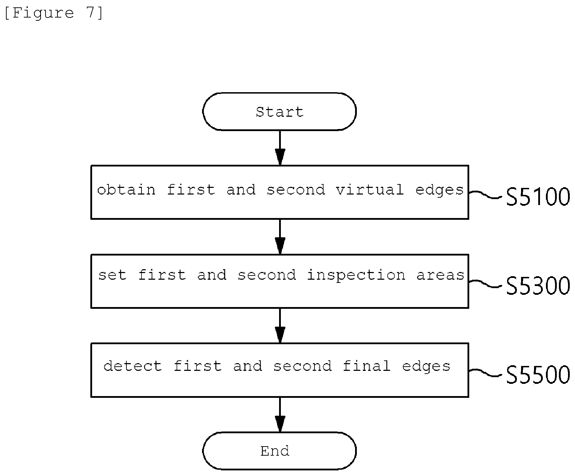

FIG. 7 is a flowchart for explaining a method of detecting final boundaries of the boundary detection method according to embodiments of the present invention.

Referring to FIG. 7, the boundary detection device 5000 may obtain virtual boundaries from the second electrode image B (S5100). Here, the virtual boundaries (L1, L2 in (B) of FIG. 6) may be boundaries corresponding to pixel coordinate information of the first temporary boundary (L1 in (A) of FIG. 6) and the second temporary boundary (L2 in (A) of FIG. 6) which are obtained based on the first electrode image (A).

Thereafter, the boundary detection device 5000 may set inspection areas for detecting final boundaries based on the first virtual boundary and the second virtual boundary in the second electrode image B (S5300).

According to embodiments, the inspection area may include a first inspection area and a second inspection area. The first inspection area may be an area with a predetermined interval D in the left and the right directions based on the first virtual boundary, as shown in FIG. 6.

Additionally, the second inspection area may be an area with a predetermined interval (D) in the left and the right directions, respectively, based on the second virtual boundary. For example, the predetermined interval (D) may be 40 pixels.

Thereafter, the boundary detection device 5000 may obtain the final boundaries FL1 and FL2 using differences in gray level within the first inspection area and the second inspection area (S5500).

More specifically, the boundary detection device 5000 may obtain the first final boundary FL1 having the maximum value among the gray level differences within the first inspection area based on the first virtual boundary.

In addition, the boundary detection device 5000 may obtain the second final boundary FL2 having the maximum value among the gray level differences within the second inspection area based on the second virtual boundary.

Accordingly, the boundary detection device of the present invention can be used to detect the widths of the uncoated region and the electrode region within the electrode by obtaining the final boundaries (FL1, FL2) of the uncoated region from the second electrode image.

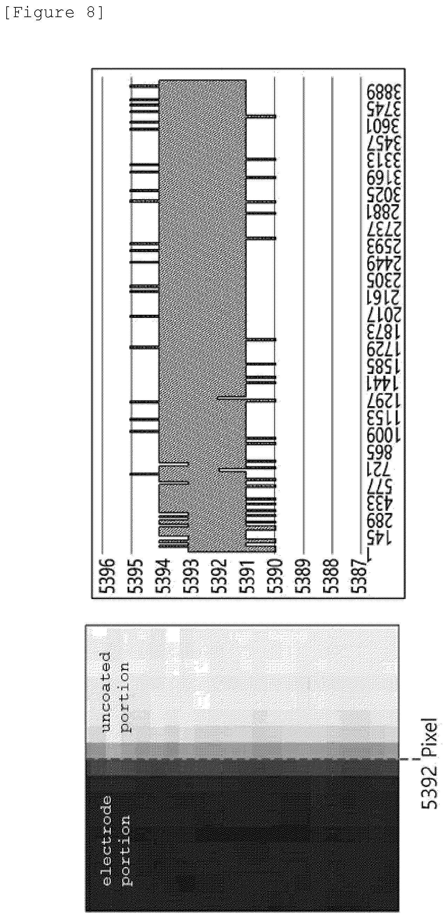

FIG. 8 is an image showing pixel coordinates of a second final boundary of the boundary detection device according to an experimental example of the present invention.

FIG. 8 shows that the boundary error of the final boundary which is measured by the boundary detection device according to the experimental example of the present invention falls within 2 pixels, when the pixel coordinates where the actual boundary on the second electrode image is located is 5392 pixel.

The boundary detection device and method according to embodiments of the present invention have been described above.

The boundary detection device and method according to embodiments of the present invention may acquire a first electrode image and a second electrode image with different brightness values in which the same electrode is captured and detect final boundaries of the uncoated portion from the second electrode image based on pixel coordinate information of boundaries of the uncoated portion obtained from the first electrode image, thereby improving detection accuracy of boundary detection.

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

In addition, the computer-readable recording medium may include hardware devices specially configured to store and execute program instructions, such as ROM, RAM, flash memory, etc. The program instructions may include not only machine language code created by a compiler, but also high-level language code that can be executed by a computer using an interpreter.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

**Claims**

1. A boundary detection device for detecting boundaries of an uncoated portion within battery electrodes, the boundary detection device comprising:

    at least one processor; and
    a memory configured to store at least one instruction executed by the at least one processor, wherein the at least one instruction includes:

       an instruction to obtain a first electrode image and a second electrode image in which the same electrode located at the same point is captured;
       an instruction to detect pixel information of temporary boundaries on both sides of an uncoated portion in the electrode from the first electrode image; and
an instruction to detect final boundaries on both sides of the uncoated portion from the second electrode image based on the pixel information.

2. The boundary detection device of claim 1, wherein the first electrode image is an image captured by adjusting an exposure value of a camera so that a pixel brightness value of the uncoated portion in the first electrode image is a predetermined first threshold value.

3. The boundary detection device of claim 2, wherein the second electrode image is an image captured by adjusting an exposure value of a camera so that a pixel brightness value of the uncoated portion in the second electrode image is a second threshold value, wherein the second threshold value is different from the first threshold value.

4. The boundary detection device of claim 1, wherein the instruction to detect the pixel information of the temporary boundaries on both sides of the uncoated portion includes:

       an instruction to detect the temporary boundaries on both sides of the uncoated portion in the first electrode image; and
       an instruction to obtain pixel coordinate information of the temporary boundaries.

5. The boundary detection device of claim 4, wherein the instruction to detect the temporary boundaries includes:

       an instruction to detect a first temporary boundary located on one side of the uncoated portion in the first electrode image using a derivative mask filter; and
       an instruction to detect a second temporary boundary located on the other side of the uncoated portion in the first electrode image using the derivative mask filter.

6. The boundary detection device of claim 5, wherein the derivative mask filter is a Sobel filter.

7. The boundary detection device of claim 1, wherein the instruction to detect the final boundaries includes:

       an instruction to identify pixel coordinate information of a first temporary boundary and a second temporary boundary and obtain a first virtual boundary and a second virtual boundary which are located at the same points on the second electrode image where the first temporary boundary and the second temporary boundary are located; and

an instruction to determine a first inspection area and a second inspection area based on the first virtual boundary and the second virtual boundary, respectively, and detect a first final boundary and a second final boundary from the first inspection area and the second inspection area, respectively.

8. The boundary detection device of claim 7, wherein the instruction to detect the first final boundary and the second final boundary includes:

an instruction to detect pixels having the maximum value in difference of brightness value compared to neighboring pixels within the first inspection area, as the first final boundary; and
an instruction to detect pixels having the maximum value in difference of brightness value compared to neighboring pixels within the second inspection area, as the second final boundary.

9. A boundary detection method for detecting boundaries of uncoated region within battery electrodes, the method comprising:

acquiring a first electrode image and a second electrode image in which the same electrode located at the same point is captured;
detecting pixel information of temporary boundaries on both sides of an uncoated portion in the electrode from the first electrode image; and
detecting final boundaries on both sides of the uncoated portion from the second electrode image based on the pixel information.

10. The boundary detection method of claim 9, wherein the first electrode image is an image captured by adjusting an exposure value of a camera so that a pixel brightness value of the uncoated portion in the first electrode image is a predetermined first threshold value.

11. The boundary detection method of claim 10, wherein the second electrode image is an image captured by adjusting an exposure value of a camera so that a pixel brightness value of the uncoated portion in the second electrode image is a second threshold value, wherein the second threshold value is different from the first threshold value.

12. The boundary detection method of claim 9, wherein the detecting the pixel information of the temporary boundaries on both sides of the uncoated portion includes:

detecting the temporary boundaries on both sides of the uncoated portion in the first electrode image; and
obtaining pixel coordinate information of the temporary boundaries.

13. The boundary detection method of claim 12, wherein the detecting the temporary boundaries includes:

detecting a first temporary boundary located on one side of the uncoated portion in the first electrode image using a derivative mask filter; and
detecting a second temporary boundary located on the other side of the uncoated portion in the first electrode image using the derivative mask filter.

14. The boundary detection method of claim 13, wherein the derivative mask filter is a Sobel filter.

15. The boundary detection method of claim 9, wherein the detecting the final boundaries includes:

identifying pixel coordinate information of a first temporary boundary and a second temporary boundary and obtaining a first virtual boundary and a second virtual boundary which are located at the same points on the second electrode image where the first temporary boundary and the second temporary boundary are located; and
determining a first inspection area and a second inspection area based on the first virtual boundary and the second virtual boundary, respectively; and detecting a first final boundary and a second final boundary from the first inspection area and the second inspection area, respectively.

16. The boundary detection method of claim 15, wherein the detecting the first final boundary and the second final boundary includes:

detecting pixels having the maximum value in difference of brightness value compared to neighboring pixels within the first inspection area, as the first final boundary; and
detecting pixels having the maximum value in difference of brightness value (gray level) compared to neighboring pixels within the second inspection area, as the second final boundary.

17. A boundary detection system for detecting boundaries of an uncoated portion within battery electrodes, the boundary detection system comprising:

an imaging device configured to generate a first electrode image and a second electrode image in which the same electrode located at the same point is captured with different brightness values, by adjusting an exposure value; and

a boundary detection device configured to obtain the first electrode image and the second electrode image from the imaging device, to detect pixel information of temporary boundaries on both sides of an uncoated portion in the electrode from the first electrode image, and to detect final boundaries on both sides of the uncoated portion from the second electrode image based on the pixel information.

[Figure 1]

[Figure 2]

[Figure 3]

```
+-------------------------------------------------+
|                                                 |
|    +----------------------------------+         |
|    |             camera               |  ~1000  |
|    +----------------------------------+         |
|                                                 |
|    +----------------------------------+         |
|    |   edge detection apparatus       |  ~5000  |
|    +----------------------------------+         |
|                                                 |
|          edge detection system                  |
|                                                 |
+-------------------------------------------------+
```

[Figure 4]

[Figure 5]

```
                        ┌─────────────┐
                        │    Start     │
                        └─────────────┘
                               │
                               ▼
          ┌──────────────────────────────────────┐
          │  obtain first and second electrode    │  ～S1000
          │  images                                │
          └──────────────────────────────────────┘
                               │
                               ▼
          ┌──────────────────────────────────────┐
          │  detect temporary edges of uncoated   │  ～S3000
          │  region from first electrode image    │
          └──────────────────────────────────────┘
                               │
                               ▼
          ┌──────────────────────────────────────┐
          │  detect final edges of uncoated       │  ～S5000
          │  region from second electrode image   │
          └──────────────────────────────────────┘
                               │
                               ▼
                        ┌─────────────┐
                        │     End      │
                        └─────────────┘
```

[Figure 6]

[Figure 7]

```
                    ┌─────────────┐
                    │    Start    │
                    └─────────────┘
                           │
                           ▼
        ┌──────────────────────────────────────┐
        │  obtain first and second virtual edges │──── S5100
        └──────────────────────────────────────┘
                           │
                           ▼
        ┌──────────────────────────────────────┐
        │  set first and second inspection areas │──── S5300
        └──────────────────────────────────────┘
                           │
                           ▼
        ┌──────────────────────────────────────┐
        │   detect first and second final edges  │──── S5500
        └──────────────────────────────────────┘
                           │
                           ▼
                    ┌─────────────┐
                    │     End     │
                    └─────────────┘
```

[Figure 8]

## INTERNATIONAL SEARCH REPORT

| International application No. |
|---|
| **PCT/KR2023/012877** |

### A. CLASSIFICATION OF SUBJECT MATTER

**G01B 11/02**(2006.01)i; **G01B 11/03**(2006.01)i; **G01N 21/84**(2006.01)i; **G06T 7/00**(2006.01)i; **G06T 7/11**(2017.01)i; **G06T 7/13**(2017.01)i; **H01M 10/04**(2006.01)i

According to International Patent Classification (IPC) or to both national classification and IPC

### B. FIELDS SEARCHED

Minimum documentation searched (classification system followed by classification symbols)

G01B 11/02(2006.01); G01B 11/00(2006.01); G01B 9/02(2006.01); G06T 7/00(2006.01); G06T 7/10(2017.01); H04N 5/208(2006.01); H04N 5/217(2011.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리 전극(battery electrode), 무지부(plain part), 경계선(boundary line), 전극 이미지(electrode image), 픽셀(pixel), 검출(detect)

### C. DOCUMENTS CONSIDERED TO BE RELEVANT

| Category* | Citation of document, with indication, where appropriate, of the relevant passages | Relevant to claim No. |
|---|---|---|
| A | KR 10-2022-0034496 A (ZOOTOS CORPORATION) 18 March 2022 (2022-03-18)<br>See paragraphs [0001] and [0040]-[0041]. | 1-17 |
| A | KR 10-2014-0136138 A (SAMSUNG ELECTRONICS CO., LTD.) 28 November 2014 (2014-11-28)<br>See claim 1. | 1-17 |
| A | JP 2010-025799 A (TOYOTA MOTOR CORP.) 04 February 2010 (2010-02-04)<br>See claim 1. | 1-17 |
| A | KR 10-2022-0048191 A (LG CHEM, LTD.) 19 April 2022 (2022-04-19)<br>See paragraph [0036]. | 1-17 |
| A | KR 10-0141308 B1 (DAEWOO ELECTRONICS CO., LTD.) 15 June 1998 (1998-06-15)<br>See claim 1. | 1-17 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **20 December 2023** | **20 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/012877**

| Patent document cited in search report | | | Publication date (day/month/year) | Patent family member(s) | | | Publication date (day/month/year) |
|---|---|---|---|---|---|---|---|
| KR | 10-2022-0034496 | A | 18 March 2022 | KR | 10-2458433 | B1 | 26 October 2022 |
| KR | 10-2014-0136138 | A | 28 November 2014 | | None | | |
| JP | 2010-025799 | A | 04 February 2010 | | None | | |
| KR | 10-2022-0048191 | A | 19 April 2022 | | None | | |
| KR | 10-0141308 | B1 | 15 June 1998 | KR | 10-1996-0006616 | A | 23 February 1996 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220109764

- KR 1020230103920